# EUROPEAN PATENT APPLICATION

(11) **EP 4 841 804 A1**
(43) Date of publication of application: **18.11.2026**
(21) Application number: 26177967.2
(22) Date of filing: 11.05.2026
(51) Int. Cl.: H01M 50/533, H01M 50/534, H01M 50/538

(54) **SECONDARY BATTERY, BATTERY PACK AND ELECTRONIC APPARATUS**

(30) Priority: 13.05.2025 CN 202520939496 U
(71) Applicant: AESC Japan Ltd., Yokohama-shi, Kanagawa 220-0012 (JP)
(72) Inventor: LIU, Feiyang, Jiangyin City, Wuxi City, 214443 (CN); JIANG, Zhida, Jiangyin City, Wuxi City, 214443 (CN); HU, Fei, Jiangyin City, Wuxi City, 214443 (CN)
(74) Representative: Becker, Eberhard

(57) **Abstract**

A secondary battery (100) including an electrode assembly (120), a battery pack (1002), and an electronic apparatus (1000) are provided. A negative current collector (110) of a negative electrode sheet (101) of the electrode assembly (120) has a first surface (1101) and a second surface (1102) that are covered by a negative active material layer (130). A reinforcing layer (190) covers an active material layer uncoated region (110e). A gap between the end of the negative active material layer (130) on the first surface (1101) and the reinforcing layer (190) on the first surface (1101) is a, a gap between the end of the negative active material layer (130) on the first surface (1101) and the reinforcing layer (190) on the second surface (1102) is b, and a value range of b/a is 0.1 to 0.9.

## Description

### BACKGROUND

### Technical Field

The disclosure relates to the technical field of batteries, and more specifically, relates to a secondary battery, a battery pack, and an electronic apparatus.

### Description of Related Art

In the field of new energy power batteries, the application of secondary batteries is increasing. For instance, secondary batteries (e.g., lithium-ion batteries) can be applied to electronic apparatuses such as vehicles, energy storage, mobile phones, tablets, wearable devices, power banks, electronic cigarettes, digital products, power tools, power devices, energy storage devices, etc. One type of secondary battery is a prismatic battery, which includes a housing and an electrode assembly. The electrode assembly includes a positive electrode sheet, a first separator, a negative electrode sheet, and a second separator, which are stacked sequentially and wound into a flat rectangular-shaped electrode assembly and then encapsulated in the housing.

In a negative electrode sheet of the related art, the negative current collector only has the negative active material layer, and the negative active material layer directly adjoins the negative active material layer uncoated region of the negative current collector. As such, the problem that the active material layer uncoated region is prone to wrinkling is urgently needed to be solved.

### SUMMARY

In view of the problems found in the related art, the disclosure aims to provide a secondary battery, a battery pack, and an electronic apparatus capable of at least improving the strength of an active material layer uncoated region of a negative current collector and preventing the active material layer uncoated region from wrinkling.

To achieve the above, the embodiments of the disclosure provide a secondary battery including an electrode assembly. The electrode assembly includes a negative electrode sheet, a positive electrode sheet, and a separator disposed between the negative electrode sheet and the positive electrode sheet. The negative electrode sheet includes a negative current collector and a reinforcing layer. The negative current collector has a first surface and a second surface opposite to each other in a thickness direction thereof. Partial surfaces of the first surface and the second surface of the negative current collector are covered by a negative active material layer, and the negative current collector includes an active material layer uncoated region not covered by the negative active material layer. The reinforcing layer covers at least a portion of the active material layer uncoated region. A direction from the negative active material layer toward the reinforcing layer is a predetermined direction. In the predetermined direction, one end of the negative active material layer on the first surface extends beyond one end of the negative active material layer on the second surface. A gap between the end of the negative active material layer on the first surface and the reinforcing layer on the first surface is a, a gap between the end of the negative active material layer on the first surface and the reinforcing layer on the second surface is b, and a value range of b/a is 0.1 to 0.9.

In some embodiments, in the predetermined direction, a gap between the end of the negative active material layer on the first surface and the one end of the negative active material layer on the second surface is c, and a value range of c/a is 0.5 to 0.9.

In some embodiments, a grayscale value of the reinforcing layer is 0 to 110.

In some embodiments, a thickness of the reinforcing layer on one of the first surface and the second surface is h1, a thickness of the negative active material layer on one of the first surface and the second surface is h2, and a value range of h2/h1 is 2 to 15.

In some embodiments, a thickness of the negative current collector is H µm, and H≤5.5.

In some embodiments, an areal density of the negative active material layer is A mg/cm², a thickness of the negative current collector is H µm, and a value range of A/H is 0.6 to 3.5.

In some embodiments, the secondary battery is a prismatic battery and further includes a housing, a lid assembly, an electrode terminal, and a connection sheet. The housing has an opening. The electrode assembly is disposed within the housing. The lid assembly covers the opening of the housing. The electrode terminal passes through the lid assembly and is electrically isolated from the lid assembly. The connection sheet is disposed on a side of the lid assembly facing the electrode assembly and electrically connects the electrode terminal and the electrode assembly. The active material layer uncoated region includes a bent portion and a connecting portion, and the bent portion is connected between an electrode sheet base of the negative electrode sheet and the connecting portion. The reinforcing layer is located at the bent portion, and the connection sheet is welded to the connecting portion.

In some embodiments, the negative active material layer includes a flat region and a thinned region located at one end of the flat region in the predetermined direction, and the thinned region is located at an end of the flat region close to the reinforcing layer.

The embodiments of the disclosure further provide a battery pack including the secondary battery according to any one of the above.

The embodiments of the disclosure further provide an electronic apparatus including the battery pack.

In the technical solution of the disclosure, in the predetermined direction, the gap between the end of the negative active material layer on the first surface and the reinforcing layer on the first surface is a, the gap between the end of the negative active material layer on the first surface and the reinforcing layer on the second surface is b, and the value range of b/a is 0.1 to 0.9. In this way, a portion of the second reinforcing layer on the second surface can overlap a region of the gap a on the first surface, and the reinforcing layer on the second surface can provide support for the region of the gap a on the first surface. In this way, the strength of the active material layer uncoated region can be improved, and the active material layer uncoated region is prevented from wrinkling.

### BRIEF DESCRIPTION OF THE DRAWINGS

To make the technical solutions provided in the embodiments of the disclosure or the related art more clearly illustrated, several accompanying drawings required by the embodiments or the related art for description are briefly introduced as follows. Obviously, the drawings in the following description are some embodiments of the disclosure, and for a person having ordinary skill in the art, other drawings can be obtained based on these drawings without an inventive effort.
FIG. 1 is a three-dimensional schematic view illustrating a secondary battery according to an embodiment of the disclosure.
FIG. 2A is a cross-sectional schematic view illustrating the secondary battery according to an embodiment of the disclosure.
FIG. 2B is a schematic view of two electrode assemblies after tabs, connection sheets, and electrode terminals are welded according to some embodiments.
FIG. 3 is a cross-sectional schematic view of the electrode assembly of the secondary battery in FIG. 2A.
FIG. 4A to FIG. 4D are schematic views illustrating different manufacturing stages of manufacturing a negative electrode sheet according to an embodiment of the disclosure.
FIG. 4E is a partial enlarged schematic view of a region A1 in FIG. 4D according to some embodiments.
FIG. 4F is a cross-sectional schematic view of the negative electrode sheet shown in FIG. 4D.
FIG. 5A is a schematic view of the negative electrode sheet after cutting of a negative tab according to some other embodiments.
FIG. 5B is a partial enlarged schematic view corresponding to a region A2 in FIG. 5A according to some other embodiments.
FIG. 6 is a schematic view illustrating an electronic apparatus being a vehicle according to an embodiment of this disclosure.

### DESCRIPTION OF THE EMBODIMENTS

For a better understanding of the spirit of the embodiments of this disclosure, further explanations are provided below together with some preferred embodiments of the disclosure.

The embodiments of this disclosure are to be described in detail in the following paragraphs. Throughout the specification of the disclosure, similar or like components and components with similar or like functions are represented by similar reference numerals. The embodiments related to the drawings described herein are illustrative, graphical, and provided for a basic understanding of the disclosure. The embodiments of the disclosure should not be interpreted as limitations of the disclosure.

As used herein, the terms "substantially", "generally", "essentially", and "approximately" are used to describe and explain small variations. When used together with an event or circumstance, these terms may refer to examples where the event or circumstance occurs precisely as well as examples where the event or circumstance occurs very approximately.

In the specification, unless specifically designated or limited, relative terms such as: "central", "longitudinal", "lateral", "front", "rear", "right", "left", "internal", "external", "lower", "higher", "horizontal", "vertical", "above", "below", "upper", "lower", "top", "bottom", and their derivatives (such as "horizontally", "downwardly", "upwardly", etc.) shall be interpreted as referring to the orientation described in the discussion or shown in the drawings. These relative terms are used only for descriptive convenience and do not require that the disclosure be constructed or operated in a particular direction.

For ease of description, "first", "second", "third", etc. may be used herein to distinguish different components in one figure or a series of figures. "First", "second", "third" etc. are not intended to describe the corresponding components.

In a negative electrode sheet of the related art, the negative current collector only has the negative active material layer, and the negative active material layer directly adjoins the active material layer uncoated region of the negative current collector. As such, the problem that the active material layer uncoated region is prone to wrinkling occurs. For instance, in order to match a large-capacity cell, more layers of active material layer uncoated regions are required. When multiple layers of active material layer uncoated regions are laser welded to the connection sheet, the outer tabs need to be bent. Since there are multiple layers of active material layer uncoated regions, a longer path of the active material layer uncoated regions is required, which makes the active material layer uncoated regions more prone to wrinkling.

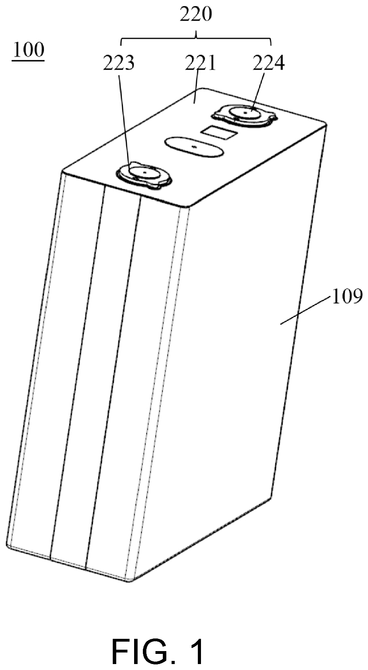

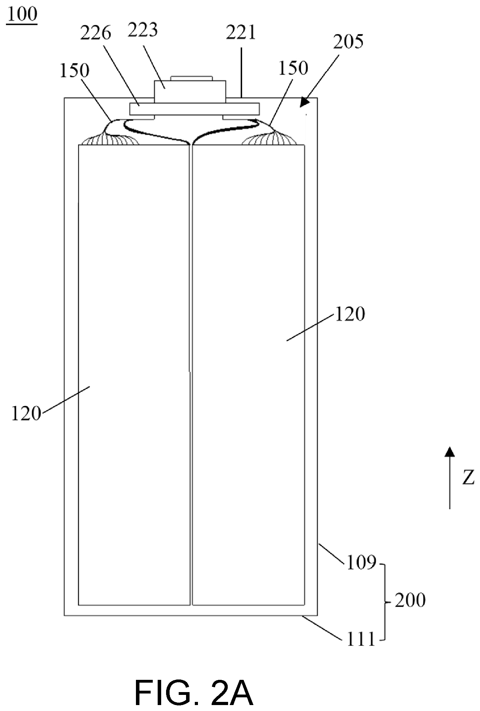

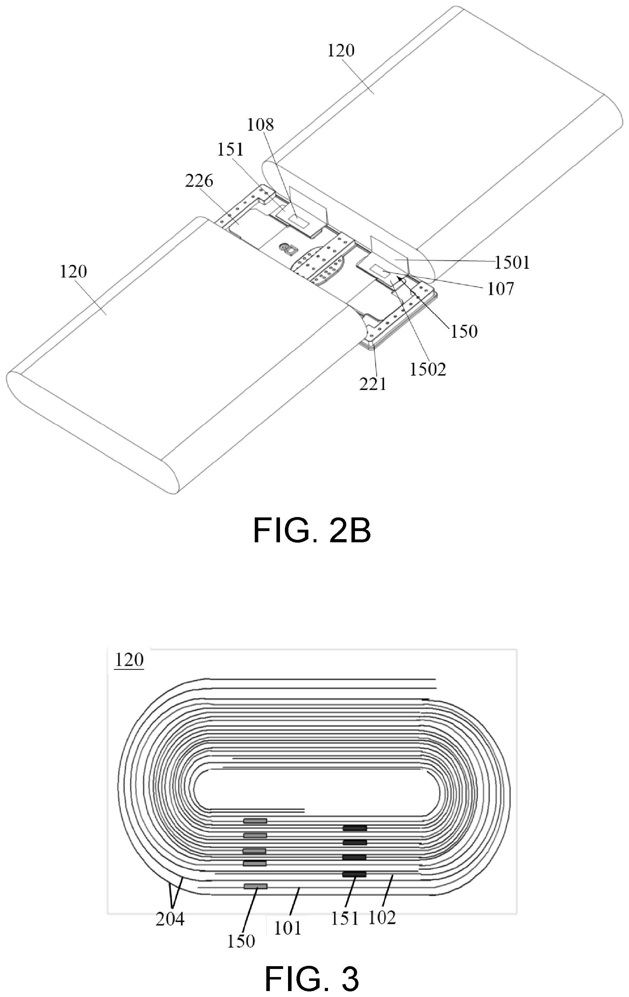

FIG. 1 is a three-dimensional schematic view illustrating a secondary battery according to an embodiment of the disclosure. FIG. 2A is a cross-sectional schematic view illustrating the secondary battery according to an embodiment of the disclosure. FIG. 2B is a schematic view of two electrode assemblies after tabs, connection sheets, and electrode terminals are welded according to some embodiments. FIG. 3 is a cross-sectional schematic view of the electrode assembly of the secondary battery in FIG. 2A.

As shown in FIG. 1 to FIG. 2B together, a secondary battery 100 may include a housing 200. The housing 200 includes a peripheral side wall 109 and an end wall 111 connected to one end of the peripheral side wall 109, and the other end of the peripheral side wall 109 opposite to the end wall 111 is provided with an opening 205. A lid assembly 221 covers the opening 205 of the housing 200, so as to define an accommodating cavity together with the housing 200, and the electrode assembly 120 is located in the accommodating cavity.

A direction from the end wall 111 toward the lid assembly 221 is a height direction Z of the secondary battery 100. The height direction Z may correspond to a direction D1 described in the following paragraphs. In this embodiment, two electrode assemblies 120 are stacked in the housing 200 in a thickness direction of the electrode assembly 120. In other embodiments, more than two electrode assemblies 120 may be arranged in the housing 200.

In some embodiments, referring to FIG. 3, the electrode assembly 120 is a wound body formed by winding a negative electrode sheet 101, a positive electrode sheet 102, and a separator 204 located between the negative electrode sheet 101 and the positive electrode sheet 102. In other embodiments, the electrode assembly 120 may also be a stacked body formed by sequentially stacking the negative electrode sheet 101, the positive electrode sheet 102, and the separator 204 located between the negative electrode sheet 101 and the positive electrode sheet 102. The electrode assembly 120 may be flat-shaped. Accordingly, the housing 200 may have a flat shape and have a rectangular parallelepiped shape. A plurality of negative tabs 150 of the negative electrode sheet 101 and a plurality of positive tabs 151 of the positive electrode sheet 102 may be stacked in the thickness direction of the electrode assembly 120. The negative electrode sheet 101, the positive electrode sheet 102, and the separator form the electrode assembly 120 by winding or stacking, and then the electrode assembly 120 is sealed in the housing to form the secondary battery.

The positive electrode sheet may include a positive current collector and a positive active material layer, and the positive active material layer is coated on a partial surface of the positive current collector. The negative electrode sheet may include a negative current collector and a negative active material layer, and the negative active material layer is coated on a partial surface of the negative current collector. In some embodiments, for example in a lithium-ion battery, a material of the positive current collector may be aluminum. The positive active material layer may include a positive active material, and the positive active material may be lithium cobalt oxide, lithium iron phosphate, ternary lithium, lithium manganate, or the like. For a high-nickel ternary lithium battery, the positive active material may be a ternary material composed of three elements: nickel, cobalt, and manganese (or aluminum). A material of the negative current collector may be copper. The negative active material layer may include a negative active material, and the negative active material may be carbon, silicon, or the like. A material of the separator may be, for example, polypropylene (PP) or polyethylene (PE), etc.

As shown in FIG. 1 to FIG. 3 together, a negative electrode terminal 223 and a positive electrode terminal 224 are disposed on the lid assembly 221. The negative electrode terminal 223 and the positive electrode terminal 224 may pass through the lid assembly 221 and be insulated from the lid assembly 221. One end of the electrode assembly 120 facing the lid assembly 221 is provided with tabs. In this embodiment, the negative tab 150 and the positive tab 151 at one end of the electrode assembly 120 are connected to the corresponding negative electrode terminal 223 and positive electrode terminal 224, respectively. In some embodiments, the negative tab 150 and the negative electrode terminal 223 and the positive tab 151 and the positive electrode terminal 224 may be connected through a corresponding connection sheet 226. The negative tab 150 and the positive tab 151 may be bent and then weld-connected to the connection sheet 226, so that a weld mark 107 and a weld mark 108 are formed on the negative tab 150 and the positive tab 151, respectively. After the negative tab 150 and the positive tab 151 are weld-connected to the connection sheet 226 (as shown in FIG. 2B), the two electrode assemblies 120 may be folded toward each other and then installed into the housing 200 (as shown in FIG. 2A).

The negative tab 150 includes the active material layer uncoated region of the negative current collector (an active material layer uncoated region 110e described in the following paragraphs). The active material layer uncoated region may include a bent portion 1501 and a connecting portion 1502. The connecting portion 1502 may be fixedly connected to the lid assembly 221 through the connection sheet 226, and the bent portion 1501 is connected between the electrode sheet base of the negative electrode sheet 101 and the connecting portion 1502. The connection sheet 226 is welded to the bent connecting portion 1502.

It should be understood that FIG. 1 to FIG. 3 are described by taking the secondary battery as a prismatic battery as an example. The secondary battery of the disclosure may also be any other suitable type of secondary battery, such as a pouch battery, a cylindrical battery, or the like.

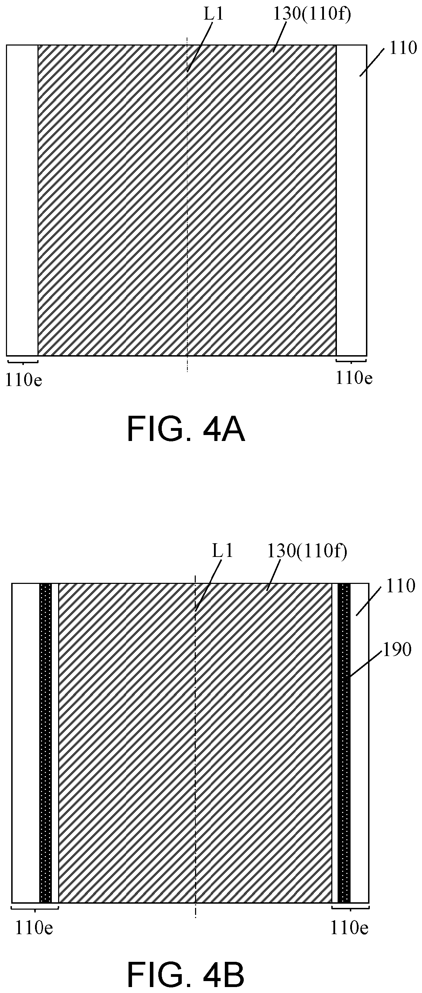

FIG. 4A to FIG. 4D are schematic views illustrating different manufacturing stages of manufacturing a negative electrode sheet according to an embodiment of the disclosure. First, referring to FIG. 4A, a negative active material layer 130 is coated on both side surfaces of the negative current collector 110 that are opposite to each other in the thickness direction thereof. The negative active material layer 130 may be coated on the negative current collector 110 by a coating device. The negative current collector 110 includes an active material layer coated region 110f covered by the negative active material layer 130 and the active material layer uncoated region 110e not covered by the negative active material layer 130. An edge portion of the negative current collector 110 in a width direction is not coated with the negative active material layer 130 to form the active material layer uncoated region 110e. In some embodiments, a material of the negative current collector 110 may be, for example, copper.

Referring to FIG. 4B, a reinforcing layer 190 is coated, and the reinforcing layer 190 covers a portion of the active material layer uncoated region 110e. In some embodiments, the negative active material layer 130 and the reinforcing layer 190 may be coated together.

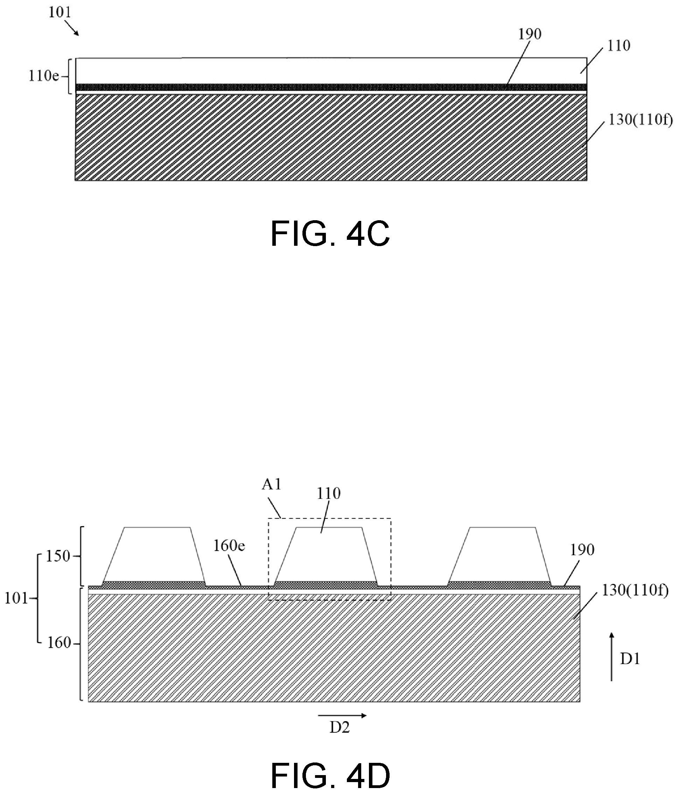

After coating the negative active material layer 130 and the reinforcing layer 190, the negative current collector 110 and the negative active material layer 130 may be cut along a dashed line L1, so that a single negative electrode sheet 101 for forming a single electrode assembly as shown in FIG. 4C is obtained. Next, one side of the active material layer uncoated region 110e of the negative current collector 110 of the negative electrode sheet 101 may be cut, and this cutting process may be referred to as tab cutting. In some embodiments, a laser may be used to perform the tab cutting process.

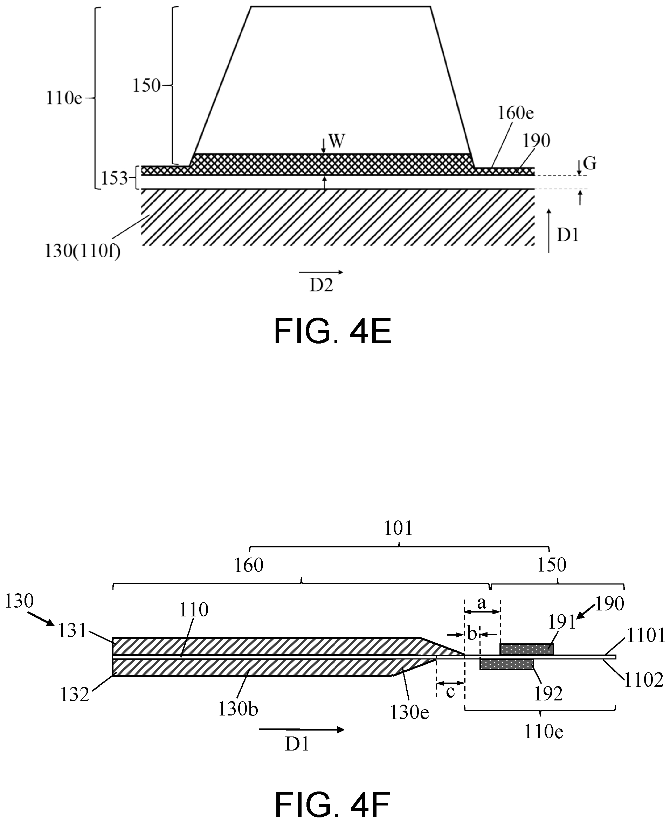

After cutting, referring to FIG. 4D and FIG. 4E, FIG. 4E is a partial enlarged schematic view of a region A1 in FIG. 4D according to some embodiments. A plurality of negative tabs 150 are formed at intervals in a length direction (direction D2) of the negative electrode sheet 101. Uncut portions of the negative current collector 110 and the negative active material layer 130 may be referred to as an electrode sheet base 160. The negative tab 150 extends from a first edge 160e of the electrode sheet base 160 in the direction D1 (which may be referred to as a predetermined direction). Referring to FIG. 4F, the electrode sheet base 160 may include the negative current collector 110 and the negative active material layer 130. The negative active material layer 130 covers two surfaces 1101 and 1102 of the negative current collector 110 that are opposite to each other in the thickness direction thereof. In addition, a thinned region 130e is formed at an edge of the negative active material layer 130 in the direction D1. The negative active material layer 130 further includes a uniformly coated flat region 130b, and the thinned region 130e is connected to one end of the flat region 130b in the direction D1. Specifically, the thinned region 130e is located at the end of the flat region 130b close to the reinforcing layer 190. A thickness of the thinned region 130e gradually decreases in the direction D1.

The disclosure takes the example of forming tabs by cutting the current collector coated with active material, and the tabs involved in the disclosure may also be connected to the electrode sheet base 160 by other means such as welding.

For the problem of the active material layer uncoated region being prone to wrinkling, by arranging the reinforcing layer 190 at the negative tab 150, the reinforcing layer 190 may serve as a tab support, which may effectively prevent the active material layer uncoated region from wrinkling. In addition, by arranging the reinforcing layer 190 at the negative tab 150, undesired electrical short circuits may be avoided, thereby making the battery safer.

Referring again to FIG. 4E, the negative tab 150 is connected to the first edge 160e of the electrode sheet base 160, and the first edge 160e extends in the direction D2 perpendicular to the direction D1. The direction D2 may be a width direction of the negative tab 150, and a width of each negative tab 150 may decrease as the distance from the electrode sheet base 160 increases. In this embodiment, during the tab cutting process, only the region covered by the reinforcing layer 190 is cut, such that the reinforcing layer 190 is located at the active material layer uncoated region 110e in the electrode sheet base 160 and is also located on the active material layer uncoated region 110e in the negative tab 150. A transition region 153 is arranged between the negative tab 150 and the active material layer coated region 110f, and the reinforcing layer 190 is located on a portion of the transition region 153 and a portion of a surface of the negative tab 150.

FIG. 4F is a cross-sectional schematic view of the negative electrode sheet shown in FIG. 4D. Referring to FIG. 4F, the reinforcing layer 190 includes a first reinforcing layer 191 located on the first surface 1101 and a second reinforcing layer 192 located on the second surface 1102. The negative active material layer 130 includes a first negative active material layer 131 located on the first surface 1101 and a second negative active material layer 132 located on the second surface 1102. In the direction D1, one end of the first negative active material layer 131 on the first surface 1101 adjacent to the first reinforcing layer 191 extends beyond one end of the second negative active material layer 132 on the second surface 1102 adjacent to the second reinforcing layer 192. On the first surface 1101, a gap between the end of the first negative active material layer 131 adjacent to the first reinforcing layer 191 and the first reinforcing layer 191 is a. In the direction D1, a gap between the end of the first negative active material layer 131 on the first surface 1101 and the second reinforcing layer 192 on the second surface 1102 is b. In some embodiments, a value range of b/a is 0.1 to 0.9. In this way, a portion of the second reinforcing layer 192 on the second surface 1102 may overlap a region corresponding to the gap a on the first surface 1101, and the second reinforcing layer 192 may provide support for the region corresponding to the gap a between the first reinforcing layer 191 and the first negative active material layer 131. In this way, the strength of the active material layer uncoated region 110e may be improved, and the active material layer uncoated region 110e is prevented from wrinkling. In addition, a height of the active material layer uncoated region 110e on the negative tab 150 in the direction D1 may be higher, so as to meet the requirement of a longer path for welding of the active material layer uncoated region.

In some embodiments where more layers of the active material layer uncoated region are required, a height of the negative tab 150 in the direction D1 is 35 mm to 38 mm, which is higher than heights of tabs in the related art (typically 30 mm to 32 mm), so that a longer tab path is provided. However, the height of the active material layer uncoated region 110e corresponding to a higher tab is also greater, making it more prone to wrinkling. By arranging the reinforcing layer 190 at the negative tab 150 and setting the value range of the gap b/a to 0.1 to 0.9, the requirement of tab welding for a longer tab path may be satisfied, while providing support for the region of the gap a on the first surface, so that the active material layer uncoated region in the multi-layer tabs is effectively prevented from wrinkling.

In the secondary battery, since the reinforcing layer 190 provides a supporting function, the strength of the tab is improved, tab insertion may be avoided, the safety of the battery is improved, and the requirement of tab welding with the connection sheet for a longer tab path is satisfied.

In some embodiments, a thickness of the negative current collector 110 is H µm, H≤5.5, i.e., the thickness of the negative current collector 110 is ≤5.5 µm. When the thickness of the negative current collector 110 is ≤5.5 µm, the energy density may be improved, so as to meet requirements such as fast charging. However, such a thin current collector makes the active material layer uncoated region 110e thinner and more prone to wrinkling. For a negative electrode sheet with a negative current collector thickness of ≤5.5 µm, by setting the value range of b/a to 0.1 to 0.9, the second reinforcing layer 192 may provide support for the region corresponding to the gap a between the first reinforcing layer 191 and the first negative active material layer 131, so as to improve the strength of the tab and avoid the problem of the thin active material layer uncoated region being more prone to wrinkling.

In the direction D1, a gap between the end of the first negative active material layer 131 adjacent to the first reinforcing layer 191 and one end of the second negative active material layer 132 adjacent to the second reinforcing layer 192 is c. The gap c may represent the dislocation between the first negative active material layer 131 and the second negative active material layer 132 on the first surface 1101 and the second surface 1102 of the negative current collector 110. In some embodiments, a value range of c/a is 0.5 to 0.9. Such a value range may allow the gap a to be appropriately larger than the gap c (i.e., the dislocation of the negative active material layers on different surfaces). If the gap a is smaller than the dislocation between the first negative active material layer 131 and the second negative active material layer 132, the first reinforcing layer 191 on the first surface 1101 may come into contact with the first negative active material layer 131, resulting in intermixing. By controlling the value range of c/a to 0.5 to 0.9, a sufficiently large gap a may be reserved to avoid contact and intermixing between the reinforcing layer and the negative active material layer.

A thickness of the first reinforcing layer 191 located on the first surface 1101 is h1, and a thickness of the first negative active material layer 131 is h2. Under the condition of controlling the dislocation of the negative active material layer, it is further necessary to control the thickness of the reinforcing layer. In some embodiments, a value range of h2/h1 is 2 to 15. Similarly, for the second surface 1102, the ratio of the thickness of the second negative active material layer 132 to the thickness of the second reinforcing layer 192 also ranges from 2 to 15. If the thickness of the first reinforcing layer 191 and/or the second reinforcing layer 192 is excessively small, the supporting force will be insufficient. If the thickness of the first reinforcing layer 191 and/or the second reinforcing layer 192 is excessively large, it will result in material loss. In addition, if the thicknesses of the first reinforcing layer 191 and the second reinforcing layer 192 exceed that of the corresponding first negative active material layer 131 and the second negative active material layer 132, it will cause uneven stress in the tab, and the active material layer uncoated region may be prone to wrinkling.

An areal density of the negative active material layer 130 is A mg/cm². A value range of the ratio A/H of the areal density A to the thickness H of the negative current collector 110 may be 0.6 to 3.5. This value range may allow the areal density of the negative active material layer to fall within an appropriate range of the current collector thickness. In some embodiments, the areal density of the negative active material layer 130 is 3 mg/cm² to 15 mg/cm². Because the setting of the areal density of the negative active material layer 130 may cause the active material layer uncoated region to wrinkle, arranging the reinforcing layer 190 on such a negative electrode sheet may improve the problem of wrinkling of the active material layer uncoated region.

In some embodiments, a grayscale value of the reinforcing layer 190 is 0 to 110. In some embodiments, a material of the reinforcing layer 190 may include a color developer, so that the grayscale value of the reinforcing layer 190 is 0 to 110. In some embodiments, the color developer may be carbon black. If the reinforcing layer 190 contains no color developer, the reinforcing layer 190 may be a light color (e.g., white) with a higher grayscale value. This may result in a small recognizable color difference between the color of the negative current collector 110 (e.g., copper material) and the white color of the reinforcing layer 190, making it difficult for image recognition equipment (e.g., a CCD camera) to recognize, and problems such as image recognition may thus occur. In embodiments where the reinforcing layer 190 includes a color developer, the grayscale value of the reinforcing layer 190 is 0 to 110, which may solve the problem of image recognition equipment being difficult to recognize and facilitate the CCD camera to recognize the size and position of the reinforcing layer 190. In addition, compared to a white reinforcing layer 190, by selecting a reinforcing layer 190 that includes a color developer (e.g., carbon black), the reinforcing layer 190 may absorb more energy, so the power of the laser used in the tab cutting process may be reduced. In the tab cutting process using a variable-power laser, the effect of reducing the power of the laser may also be achieved.

In some embodiments, the material of the reinforcing layer 190 may include ceramic, a water-based binder, and a color developer. The water-based binder may be, for example, a watersoluble polymer polyarylacetylene (PAA). If an oil-based binder is used in the reinforcing layer 190, the negative electrode sheet production line needs to be equipped with organic gas recovery equipment. By using a water-based binder, the negative electrode sheet production line may not require organic gas recovery equipment. In some embodiments, a peel force between the reinforcing layer 190 using a water-based binder and the negative current collector 110 is >300 N/m. In addition, the design using ceramic may take into account the supporting effect of the reinforcing layer 190.

In some embodiments, a maximum width of the reinforcing layer 190 in the direction D1 is W. In some embodiments, the maximum width W of the reinforcing layer 190 is 4 mm to 6 mm, for example 6 mm. A reinforcing layer 190 with an appropriate width may effectively provide a supporting function to avoid wrinkling of the active material layer uncoated region, and a reinforcing layer 190 with an appropriate width may also avoid an excessively large reinforcing layer region that occupies excessively much of the tab welding region, thereby affecting tab welding.

The reinforcing layer 190 is spaced apart from the negative active material layer 130 by a predetermined gap G in the direction D1. In some embodiments, a value range of G is 0.1 mm to 1.1 mm. In some embodiments, taking into account the process capability, the value range of the predetermined gap G may be, for example, 0.1 mm to 1 mm or 0.1 mm to 0.5 mm. If the predetermined gap G is excessively small, intermixing and edge bulging may easily occur, and if the predetermined gap G is excessively large, wrinkling of the active material layer uncoated region may not be effectively prevented.

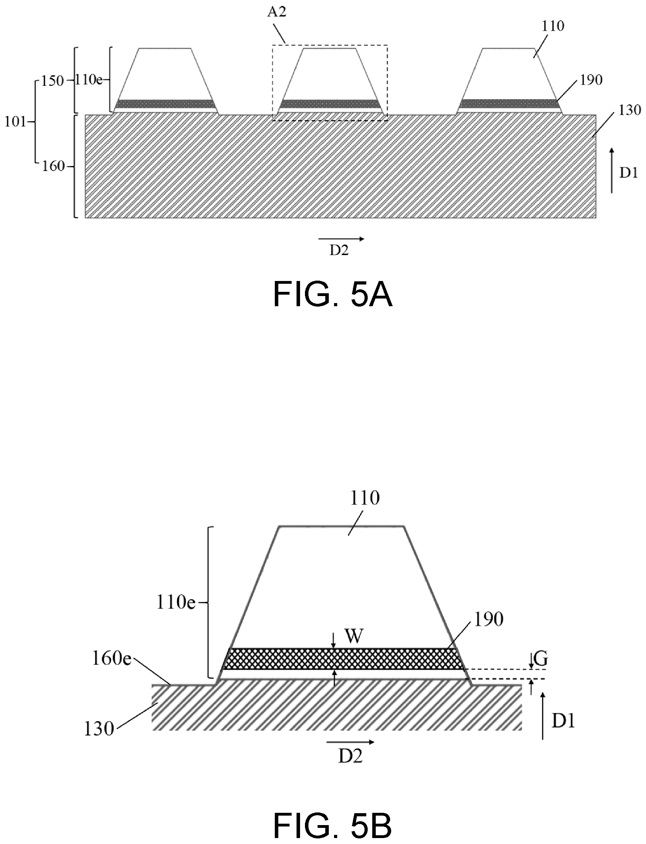

FIG. 5A is a schematic view of the negative electrode sheet after cutting of a negative tab according to some other embodiments. FIG. 5B is a partial enlarged schematic view corresponding to a region A2 in FIG. 5A according to some other embodiments. Multiple aspects of the embodiments shown in FIG. 5A and FIG. 5B may be similar to those described in the foregoing paragraphs with reference to FIG. 4A to FIG. 4F, and the following mainly describes the differences of the embodiments shown in FIG. 5A and FIG. 5B. Referring to FIG. 5A and FIG. 5B, in this embodiment, the reinforcing layer 190 is located only on the negative tab 150. A bottom edge of the reinforcing layer 190 adjacent to the negative active material layer 130 is located on the negative tab 150. In this embodiment, a portion of the negative active material layer 130 may extend onto the negative tab 150. A gap between the reinforcing layer 190 and the negative active material layer 130 is located on the negative tab 150.

In the negative electrode sheet 101 of this structure, since cutting is performed on a region covered by both the reinforcing layer 190 and the negative active material layer 130, an area of the negative active material layer 130 in the electrode sheet base 160 may be increased, so that the energy density of the battery is improved. Moreover, the reinforcing layer 190 and the negative active material layer 130 on the negative tab 150 may provide tab support together, so that the tab supporting capability is improved.

In some embodiments, the maximum width of the reinforcing layer 190 in the direction D1 is W. In some embodiments, the maximum width W of the reinforcing layer 190 is 4 mm to 6 mm, for example 6 mm. A reinforcing layer 190 with an appropriate width may effectively provide a supporting function to avoid wrinkling of the active material layer uncoated region, and a reinforcing layer 190 with an appropriate width may also avoid an excessively large reinforcing layer region that occupies excessively much of the tab welding region, thereby affecting tab welding. The reinforcing layer 190 is spaced apart from the negative active material layer 130 by a predetermined gap G in the direction D1. In some embodiments, the value range of G is 0.1 mm to 1.1 mm. In some embodiments, taking into account the process capability, the value range of the predetermined gap G may be, for example, 0.1 mm to 1 mm or 0.1 mm to 0.5 mm. If the predetermined gap G is excessively small, intermixing and edge bulging may easily occur, and if the predetermined gap G is excessively large, wrinkling of the active material layer uncoated region may not be effectively prevented.

The cross-sectional schematic views of the negative electrode sheet shown in FIG. 5A and FIG. 5B may be similar to those described with reference to FIG. 4A to FIG. 4F, so description thereof is not repeated herein.

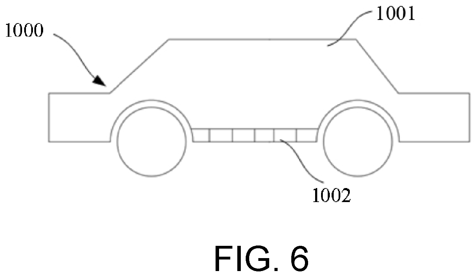

FIG. 6 is a schematic view illustrating an electronic apparatus being a vehicle according to an embodiment of this disclosure. With reference to FIG. 6, the disclosure further provides an electronic apparatus 1000. For the convenience of explanation, in the following embodiments, the electronic apparatus 1000 is treated as a vehicle for explanation. A battery pack 1002 is disposed inside the vehicle, and the battery pack 1002 may be disposed at a bottom portion, a front portion, or a rear portion of a vehicle body 1001. The battery pack 1002 may be used for power supply to the vehicle, for example, the battery pack 1002 may act as an operating power source of the vehicle. A working portion of the electronic apparatus 1000 is electrically connected to the battery pack 1002 to obtain power support. The vehicle may be but not limited to a fuel vehicle, a gas vehicle, or a new energy vehicle, and the new energy vehicle may be a pure electric vehicle, a hybrid vehicle, or a range-extended vehicle, etc. The working portion is the vehicle body, and the battery pack 1002 is arranged at the bottom portion of the vehicle body and provides electrical energy support for the driving of the vehicle or the operation of electrical components in the vehicle. However, in other embodiments, the electronic apparatus 1000 may be a mobile phone, a portable apparatus, a notebook computer, a ship, a spacecraft, an electric toy, an electric tool, etc. The spacecraft includes but not limited to an airplane, a rocket, a space shuttle, a spaceship, etc. The working portion may be a unit component that can obtain the electric energy of the battery pack 1002 and perform corresponding work, such as a blade rotating unit of a fan, a dust collection working unit of a vacuum cleaner, etc. The electric toy includes but not limited to a stationary or mobile electric toy, for example, a game machine, an electric car toy, an electric boat toy, an electric airplane toy, etc. The electric tool includes a metal cutting electric tool, a grinding electric tool, an assembling electric tool, and an electric tool for railway use, such as an electric drill, an electric grinder, an electric wrench, an electric screwdriver, an electric hammer, an impact drill, a concrete vibrator, an electric planer, etc. The above electronic apparatus 1000 is not particularly limited in the embodiments of the disclosure. The battery pack 1002 may include a plurality of secondary batteries, such as the secondary battery 100 described in the foregoing paragraphs.

## Claims

1. A secondary battery (100) comprising an electrode assembly (120), wherein the electrode assembly (120) comprises a negative electrode sheet (101), a positive electrode sheet (102), and a separator (204) disposed between the negative electrode sheet (101) and the positive electrode sheet (102), and the negative electrode sheet (101) comprises:
a negative current collector (110) having a first surface (1101) and a second surface (1102) opposite to each other in a thickness direction thereof, wherein partial surfaces of the first surface (1101) and the second surface (1102) are covered by a negative active material layer (130), and the negative current collector (110) comprises an active material layer uncoated region (110e) not covered by the negative active material layer (130); and
a reinforcing layer (190) covering at least a portion of the active material layer uncoated region (110e), wherein a direction (D1) from the negative active material layer (130) toward the reinforcing layer (190) is a predetermined direction,
wherein in the predetermined direction, one end of the negative active material layer (130) on the first surface (1101) extends beyond one end of the negative active material layer (130) on the second surface (1102), a gap between the end of the negative active material layer (130) on the first surface (1101) and the reinforcing layer (190) on the first surface (1101) is a, a gap between the end of the negative active material layer (130) on the first surface (1101) and the reinforcing layer (190) on the second surface (1102) is b, and a value range of b/a is 0.1 to 0.9.

2. The secondary battery (100) according to claim 1, wherein
in the predetermined direction, a gap between the end of the negative active material layer (130) on the first surface (1101) and the one end of the negative active material layer (130) on the second surface (1102) is c, and a value range of c/a is 0.5 to 0.9.

3. The secondary battery (100) according to claim 1, wherein
a grayscale value of the reinforcing layer (190) is 0 to 110.

4. The secondary battery (100) according to claim 1, wherein
a thickness of the reinforcing layer (190) on one of the first surface (1101) and the second surface (1102) is h1, a thickness of the negative active material layer (130) on one of the first surface (1101) and the second surface (1102) is h2, and a value range of h2/h1 is 2 to 15.

5. The secondary battery (100) according to claim 1, wherein
a thickness of the negative current collector (110) is H µm, and H≤5.5.

6. The secondary battery (100) according to claim 1, wherein
an areal density of the negative active material layer (130) is A mg/cm², a thickness of the negative current collector (110) is H µm, and a value range of A/H is 0.6 to 3.5.

7. The secondary battery (100) according to claim 1, wherein the secondary battery (100) is a prismatic battery and further comprises:
a housing (200) having an opening (205), wherein the electrode assembly (120) is disposed within the housing (200);
a lid assembly (221) covering the opening (205) of the housing (200);
an electrode terminal (223, 224) passing through the lid assembly (221) and electrically isolated from the lid assembly (221); and
a connection sheet (226) disposed on a side of the lid assembly (221) facing the electrode assembly (120) and electrically connecting the electrode terminal (223, 224) and the electrode assembly (120),
wherein the active material layer uncoated region (110e) comprises a bent portion (1501) and a connecting portion (1502), the bent portion (1501) is connected between an electrode sheet base (160) of the negative electrode sheet (101) and the connecting portion (1502), the reinforcing layer (190) is located at the bent portion (1501), and the connection sheet (226) is welded to the connecting portion (1502).

8. The secondary battery (100) according to claim 1, wherein
the negative active material layer (130) comprises a flat region (130b) and a thinned region (130e) located at one end of the flat region (130b) in the predetermined direction, and the thinned region (130e) is located at an end of the flat region (130b) close to the reinforcing layer (190).

9. A battery pack (1002) comprising the secondary battery (100) according to any one of claims 1-8.

10. An electronic apparatus (1000) comprising the battery pack (1002) according to claim 9.
